# EUROPÄISCHE PATENTSCHRIFT

(11) **EP 1 476 335 B1**
(45) Veröffentlichungstag und Bekanntmachung des Hinweises auf die Patenterteilung: **29.09.2010**
(21) Anmeldenummer: 03714651.1
(22) Anmeldetag: 21.02.2003
(51) Int. Cl.: B60R 25/04, B60R 11/00, B60R 7/04

(54) **STEUERGERÄT FÜR EIN KRAFTFAHRZEUG**
CONTROLLER FOR A MOTOR VEHICLE
APPAREIL DE COMMANDE POUR VEHICULE AUTOMOBILE

(30) Priorität: 21.02.2002 DE 10207265
(43) Veröffentlichungstag der Anmeldung: 17.11.2004
(73) Patentinhaber: Marquardt GmbH, 78604 Rietheim-Weilheim (DE)
(72) Erfinder: MARQUARDT, Jakob, 78604 Rietheim-Weilheim (DE); MÜLLER, Karl, 78628 Rottweil-Neufra (DE)
(74) Vertreter: Otten, Herbert
(86) Internationale Anmeldenummer: PCT/DE2003/000544
(87) Internationale Veröffentlichungsnummer: WO 2003/072402

(56) Entgegenhaltungen:
- EP-A- 0 778 183
- EP-A- 0 919 431
- WO-A-99/28169
- DE-A- 19 707 318
- DE-C- 19 525 180
- DE-C- 19 641 898
- US-A- 5 254 996
- US-A- 6 011 320

## Beschreibung

Die Erfindung betrifft ein Steuergerät nach dem Oberbegriff des Patentanspruchs 1.

Solche Steuergeräte sind, insbesondere in Kraftfahrzeugen, zur Ausführung gewisser Steuerfunktionen angeordnet.

Im Kraftfahrzeug besteht die Notwendigkeit für viele Ablagefächer oder auch Halterungen für Systeme mit technischen Funktionen, wie beispielsweise für das Handy oder einen elektronischen Zündschlüssel. Die Halterungen sind im allgemeinen individuell für das zugehörige System angepasst. Für die jeweilige Funktion muss das System dann in die zugehörige Halterung eingesteckt werden.

Steuergeräte in Kraftfahrzeugen für die Fahrberechtigung mit einer solchen Halterung oder einem derartigen Ablagefach sind aus der US 5 254 996 A sowie aus der DE 196 41 898 C1 bekannt. Des weiteren ist aus der DE 197 47 732 A1 ein Steuergerät im Kraftfahrzeug bekannt, das ein Ablagefach zur Aufnahme von unterschiedlich ausgestalteten Identifikations(ID)-Gebern für die Fahrberechtigung des Kraftfahrzeugs aufweist.

Zukünftige Entwicklungen beim elektronischen Zündschlüssel oder auch bei Fahrberechtigungssystemen gehen zu sogenannten "Wireless"-Systemen, wie sie mit "KeylessGo"- oder "KeylessEntry"-Systemen bezeichnet werden. Bei diesen Systemen muß der Identifikations(ID)-Geber, nämlich der elektronische Zündschlüssel oder auch die Chipkarte, nicht mehr in eine Aufnahme eingesteckt werden, vielmehr findet eine drahtlose Signalübertragung zur Authentikation des ID-Gebers statt. Nur für den Fall einer erschöpften Batterie im ID-Geber ist eine spezielle Aufnahme zur Energie- und/oder Signalübertragung vorgesehen. Oft ist der ID-Geber an einem Schlüsselbund angebracht, für den jedoch kein spezielles Ablagefach im Kraftfahrzeug vorgesehen ist.

Bei Handys steht dessen Markteinführung mit "Wireless Bluetooth" bevor, wobei das Handy nicht mehr in eine spezielle Halterung gesteckt werden muss. Die Nachladung des Akkus im Handy ist in der Homestation vorgesehen.

Der Erfindung liegt die Aufgabe zugrunde, die Vielzahl der Ablagefächer und/oder Halterungen für Systeme mit technischen Funktionen im Kraftfahrzeug zu verringern.

Diese Aufgabe wird durch ein Steuergerät, das gemäß den Merkmalen des Anspruchs 1 ausgebildet ist, gelöst.

Das erfindungsgemäße Steuergerät für wenigstens eine Steuerfunktion für das Bordnetz eines Kraftfahrzeugs ist mit einem Ablagefach versehen. Das Ablagefach dient der Aufnahme für ein der Steuerfunktion zugeordnetes, mobiles Steuerteil, nämlich einen ID-Geber. Das Ablagefach dient zusätzlich zur Aufnahme eines Mobiltelefons und kann eine elektrische Ladestation für das mobile Steuerteil aufweisen. Weitere Ausgestaltungen der Erfindung sind Gegenstand der Unteransprüche.

Für die Architektur des Steuergerätes bietet sich ein modularer Aufbau mit wenigstens zwei Moduln für jeweils eine Steuerfunktion für das Bordnetz und mit wenigsten einem den Steuerfunktionen zugeordneten Busanschluß in der Art eines Gateways an. In diesem Fall dient das Steuergerät als zentrales Bordnetz-Steuergerät für mehrere Steuerfunktionen und gleichzeitig der Ablage eines mobilen Steuerteils, so dass der Platzbedarf im Kraftfahrzeug verringert ist.

Ist das Kraftfahrzeug mit einer "KeylessGo"-Funktionalität ausgestattet, so bietet es sich an, einen Start/Stop-Schalter für die Bedienung der "KeylessGo"-Funktionalität des Kraftfahrzeugs am Steuergerät anzuordnen. Vorteilhafterweise wird weiterhin das Steuergerät im Cockpit oder Mittelkonsolenbereich des Kraftfahrzeugs zentral positioniert, womit eine gut zugängliche und ergonomische Bedienung der Starttaste für den Motor erzielt wird. Aus demselben Grund bietet es sich auch an, das Telefonbedienfeld in das Steuergerät zu integrieren.

In weiterer Ausgestaltung ist der Ladezustand und/oder die Ladenotwendigkeit des mobilen Steuerteils ermittelbar. Der ermittelte Ladezustand kann dann über Funk vom mobilen Steuerteil zu einer zentralen Empfangsstation im Steuergerät übermittelt werden. Dort kann schließlich der Ladezustand über eine Busvernetzung zur Anzeige im Kombiinstrument in der Instrumententafel, in einem zentralen Display in der Mittelkonsole o. dgl. übermittelt werden. Der Benutzer wird somit rechtzeitig auf das Erfordernis hingewiesen, das mobile Steuerteil nachzuladen und kann dieses dann bei Bedarf in das Ablagefach einlegen. Arbeitet die elektrische Ladestation mit einer kontaktlosen Energieübertragung, so genügt ein einfaches Einlegen des mobilen Steuerteils ohne daß dessen Gehäuse geöffnet werden müßte. Ist der kontaktlosen Energieübertragung zusätzlich eine Signalübertragung überlagert, so kann das mobile Steuerteil auf einfache Art im Ablagefach mit dem Steuergerät während des Ladevorgangs kommunizieren.

Zur Verhinderung von Verschmutzungen sowie auch aus Designgründen besitzt das Ablagefach vorteilhafterweise eine mittels einer Abdeckung versehene Öffnung als Zugang. Die Abdeckung für das Ablagefach ist zweckmäßigerweise als Klappe oder Schieber ausgestaltet. Die Abdeckung kann elektromotorisch bewegbar sein. Mittels eines Elektromotors zur elektrischen oder eines Elektromagneten zur elektromagnetischen Ent- und/oder Verriegelung wird für das abgelegte mobile Steuerteil ein verbesserter Diebstahlschutz erzielt, indem die elektrische bzw. elektromagnetische Entriegelung über einen Code erfolgt. Selbstverständlich kann jedoch auch ein herkömmliches Schloß zur mechanischen Verriegelung der Abdeckung vorgesehen sein.

Die mit der Erfindung erzielten Vorteile bestehen insbesondere darin, daß in das Steuergerät eine Vielzahl von Funktionen konzentriert sind, was mit hohen Kosteneinsparungen für das Kraftfahrzeug einhergeht. Vor allem werden weniger Ablagen und Halterungen als bisher im Kraftfahrzeug benötigt, so daß der dafür erforderliche Platzbedarf verringert ist. Außerdem wird durch das erfindungsgemäße Steuergerät die Ergonomie und Bedienfreundlichkeit für den Benutzer gesteigert. Schließlich ist auch die Diebstahlsicherheit für im Kraftfahrzeug befindliche mobile Steuerteile verbessert.

Ausführungsbeispiele der Erfindung sind in den Zeichnungen dargestellt und werden im folgenden näher beschrieben. Es zeigen
Fig. 1 ein Kraftfahrzeug, das mit einem ein zentrales Bordnetz-Steuergerät aufweisenden Schließsystem ausgestattet ist,
Fig. 2 ein schematisches Blockschaltbild für das Schließsystem, insbesondere mit dessen bedienungsunabhängigen Funktionen,
Fig. 3 schematisch das Schließsystem mit dessen bedienungsabhängigen Funktionen,
Fig. 4 ein schematisches Blockschaltbild des zentralen Bordnetz-Steuergeräts in einer ersten Ausführungsform,
Fig. 5 ein zentrales Bordnetz-Steuergerät in einer zweiten Ausführungsform,
Fig. 6 ein zentrales Bordnetz-Steuergerät in einer dritten Ausführungsform,
Fig. 7 die Ausgestaltung des Steuergeräts in perspektivischer Ansicht,
Fig. 8 das Steuergerät in einer weiteren Ausgestaltung,
Fig. 9 das Steuergerät wie in Fig. 8 mit eingelegtem ID-Geber,
Fig. 10 das Steuergerät wie in Fig. 8 mit eingelegtem Mobiltelefon,
Fig. 11 das Steuergerät in nochmals einer weiteren Ausgestaltung und
Fig. 12 das im Innenraum des Kraftfahrzeugs angeordnete Steuergerät.

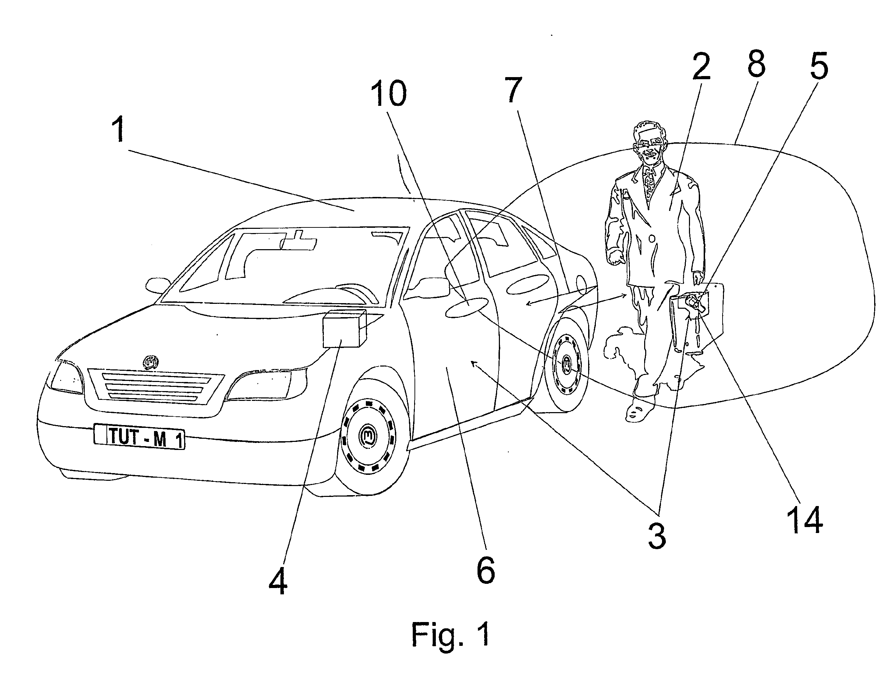

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als

Türschließsystem versehen, das eine als ein Steuergerät ausgebildete erste Einrichtung 4 und eine zugehörige zweite Einrichtung 5 umfaßt. Die zweite Einrichtung 5 ist in der Art eines elektronischen Schlüssels, einer Chipkarte, einer Smartcard o. dgl., nachfolgend auch als ID(Identifikations)-Geber bezeichnet, ausgebildet. Die zweite Einrichtung 5 befindet sich im Besitz des berechtigten Benutzers 2, womit dieser innerhalb eines Wirkbereichs 8 bedienungsunabhängig Zugang zum Kraftfahrzeug 1 besitzt.

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7. Bei wenigstens einem dieser zwischen der zweiten Einrichtung 5 und der ersten Einrichtung 4 übertragenen Signale 7 handelt es sich um ein codiertes, elektromagnetisches Betriebssignal. Das codierte Betriebssignal 7 dient zur Authentikation der zweiten Einrichtung 5, womit bei berechtigter zweiter Einrichtung 5 nach positiver Auswertung des übertragenen Betriebssignals 7 eine Änderung des Zustandes der ersten Einrichtung 4 bewirkbar ist. Das Betriebssignal 7 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Die Übertragung des codierten Betriebssignals 7 erfolgt dann, wenn der berechtigte Benutzer 2 den Türgriff 10 an der Autotüre 6 betätigt oder sich dem Türgriff 10 annähert. Dadurch wird die Entriegelung der Autotüren 6 entsprechend der Keyless Entry-Funktionalität ausgelöst. Ebensogut kann die Übertragung des codierten Betriebssignals 7 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer den Wirkbereich 8 verlassen hat.

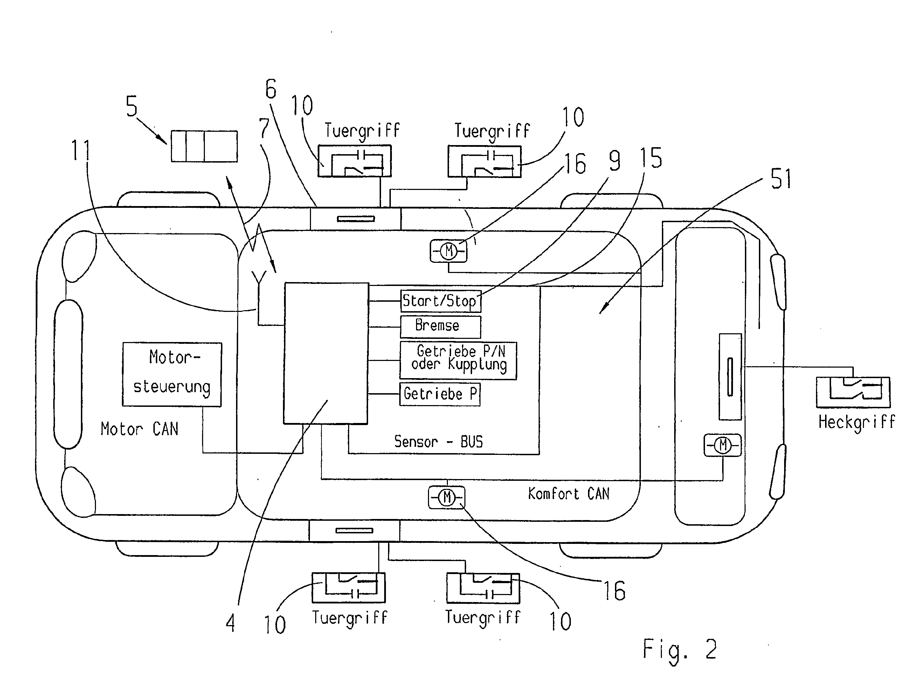

Das Schließsystem 3 stellt weiterhin bedienungsunabhängig die Fahrberechtigung für das Kraftfahrzeug 1 fest. Hierzu bewirkt die erste Einrichtung 4 ebenfalls entsprechend den beiden Zuständen die Freigabe und/oder Sperrung eines funktionsrelevantes Bauteils des Kraftfahrzeugs 1, beispielsweise kann hier eine Freigabe und/oder Sperrung einer Wegfahrsperre, des Motorsteuergeräts o. dgl. erfolgen. Die Übertragung des codierten Betriebssignals 7 zur Authentikation der zweiten Einrichtung 5 erfolgt dann, wenn der berechtigte Benutzer 2 sich im Innenraum 51 des Kraftfahrzeugs 1 befindet und einen in Fig. 2 gezeigten Start/Stop-Schalter 9 betätigt. Dadurch wird der Start-Vorgang o. dgl. des Kraftfahrzeugs 1 entsprechend der KeylessGo-Funktionalität ausgelöst.

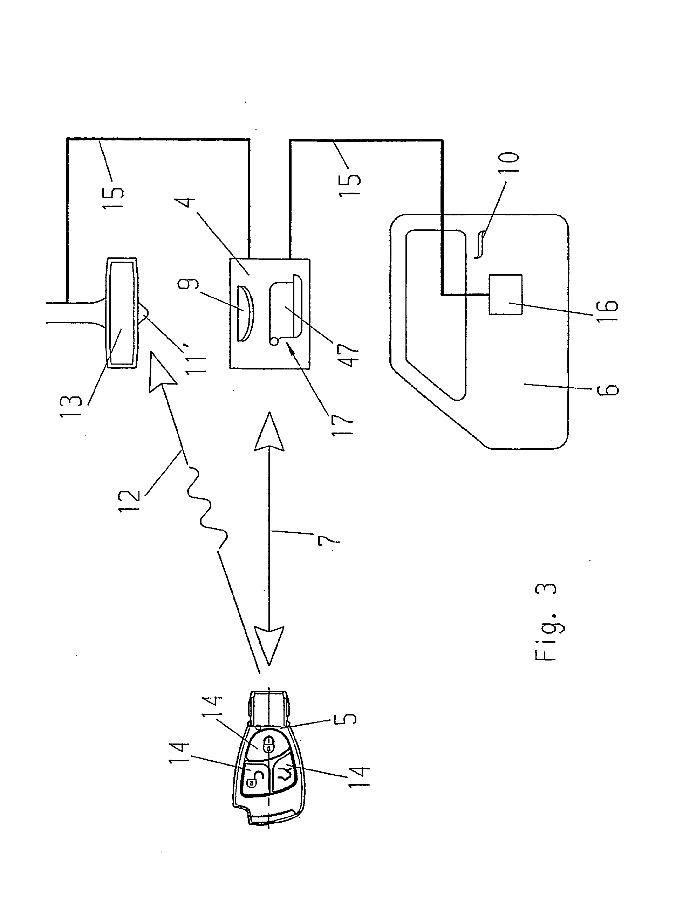

Wie anhand der Fig. 3 zu sehen ist, läßt sich mit Hilfe des ID-Gebers 5 das Schließsystem 3 zur Zugangsberechtigung auch fernbedienbar ansteuern. Im vorliegenden Fall lassen sich die Autotüren 6 des Kraftfahrzeugs 1 fernbedienbar bis zu einer gewissen maximalen Entfernung vom Kraftfahrzeug 1 ver- und entriegeln, d.h. die Zentralverriegelung für die Autotüren 6 läßt sich so durch den Benutzer 2 betätigen.

Hierfür ist zwischen dem ID-Geber 5 und dem in Fig. 2 gezeigten Sender/Empfänger 11 ein codiertes Fernbedienungssignal 12 übertragbar. Selbstverständlich kann auch ein Sender/Empfänger 11' an sonstiger Stelle zentral im Kraftfahrzeug 1 angeordnet sein, beispielsweise am Innenspiegel 13, wie in Fig. 3 zu sehen ist. Als Fernbedienungssignale 12 werden in der Regel elektromagnetische Signale, wie Hf-Signale und/oder Infrarot-Signale o. dgl., verwendet. Die Übertragung des Fernbedienungssignals 12 ist mittels am Gehäuse des ID-Gebers 5 befindlicher, als Tasten ausgestalteter Betätigungsorgane 14 durch den Benutzer 2 auslösbar. Das übertragene Fernbedienungssignal 12 wird dann einer im Kraftfahrzeug 1 befindlichen ersten Einrichtung 4 zugeführt und nach dessen positiver Auswertung, d.h. falls es sich um die berechtigte zweite Einrichtung 5 handelt, wird ein beispielsweise in der jeweiligen Autotüre 6 befindliches Steuergerät 16, das mit der ersten Einrichtung 4 über ein Bussystem 15 in Verbindung steht, zur Ver- oder Entriegelung der Autotüren 6 angesteuert. Bei dem in Fig. 3 gezeigten ID-Geber 5 sind insgesamt drei Tasten 14 vorhanden, und zwar je eine Taste 14 zur Entriegelung und Verriegelung der Autotüren 6 sowie eine weitere Taste 14 für die Öffnung des Kofferraumdeckels.

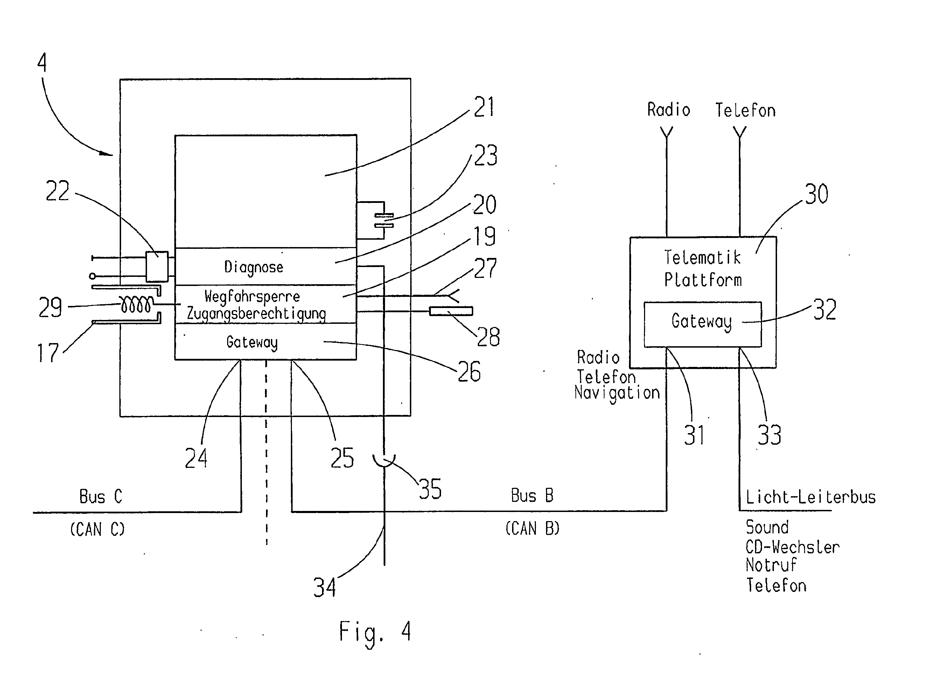

In Fig. 3 ist weiter die im wesentlichen bedienungsabhängige Fahrberechtigung gezeigt. Hierzu wird die zweite Einrichtung 5 in ein mit einer Abdeckung 47 versehenes Ablagefach 17 der ersten Einrichtung 4 eingelegt. Hierbei kann eine kontaktlose induktive Energieübertragung von einer in Fig. 4 sichtbaren Ladestation 29 in der ersten Einrichtung 4 auf die zweite Einrichtung 5 eingeschaltet werden, so daß die für den bestimmungsgemäßen Betrieb der zweiten Einrichtung 5 benötigte Energie von der ersten Einrichtung 4 geliefert wird. Anschließend tauscht die erste Einrichtung 4 mit der im Ablagefach 17 befindlichen zweiten Einrichtung 5 das codierte Betriebssignal 7 aus, wobei es sich beispielsweise um Infrarotsignale handeln kann. Nach positiver Auswertung des übertragenen Betriebssignals 7 ist die Freigabe für die Wegfahrsperre auslösbar. Nach Freigabe der Wegfahrsperre ist die Inbetriebnahme des Kraftfahrzeugs 1 durch Betätigen des Start/Stop-Schalters 9 durch den Benutzer 2 ermöglicht.

Die nähere Ausbildung der in Fig. 2 lediglich schematisch gezeigten ersten Einrichtung 4 ist als Blockschaltbild näher in Fig. 4 zu sehen.

Die erste Einrichtung 4 ist als Steuergerät für das Bordnetz eines Kraftfahrzeugs 1, und zwar bevorzugterweise als zentrales Bordnetz-Steuergerät ausgebildet. Das zentrale Bordnetz-Steuergerät 4 besitzt einen modularen Aufbau und enthält wenigstens zwei Module 19, 20 für jeweils eine grundlegende Steuerfunktion für das Bordnetz. Das Modul 19 beinhaltet die Steuerfunktion für die Wegfahrsperre sowie für die Zugangsberechtigung, während das Modul 20 die Steuerfunktion der Diagnose für das Kraftfahrzeug 1 realisiert. Diese beiden von den Moduln 19, 20 realisierten Steuerfunktionen werden von einem Mikrocontroller 21 abgearbeitet, der eine Spannungsversorgung 22 und einen Quarz 23 als Peripherie besitzt. Zweckmäßigerweise bearbeitet der Mikrocontroller 21 die Steuerfunktionen sämtlicher Module, falls im Bordnetz-Steuergerät 4 noch mehr Module angeordnet sind.

Diesen grundlegenden Steuerfunktionen ist wenigstens ein Busanschluß 24, 25 zugeordnet. Vorliegend handelt es sich um einen Busanschluß 24 für den sogenannten Moto-CAN (CAN C)-Bus sowie um einen Busanschluß 25 für den sogenannten Body-CAN (CAN B)-Bus. Der CAN C-Bus ist vor allem mit dem Motor, dem Getriebe, der Fahrdynamiksteuerung und dem Kombiinstrument verbunden. Der mit kleineren Baudraten arbeitende CAN B-Bus verbindet beispielsweise die gesamte Innenraum-, die Dach, die Tür- und die Heck-Elektronik im Kraftfahrzeug 1. Der Busanschluß 24, 25 für den CAN B- sowie CAN C-Bus ist an einem in der Art eines integrierten Gateways ausgestaltetern weiteren Modul 26 im Bordnetz-Steuergerät 4 angeordnet. Dem Modul 26 sind für die Busanschlüsse 24, 25 dem Stand der Technik entsprechende und daher nicht weiter eingezeichnete Bus-Interfaceschaltungen vorgeschaltet.

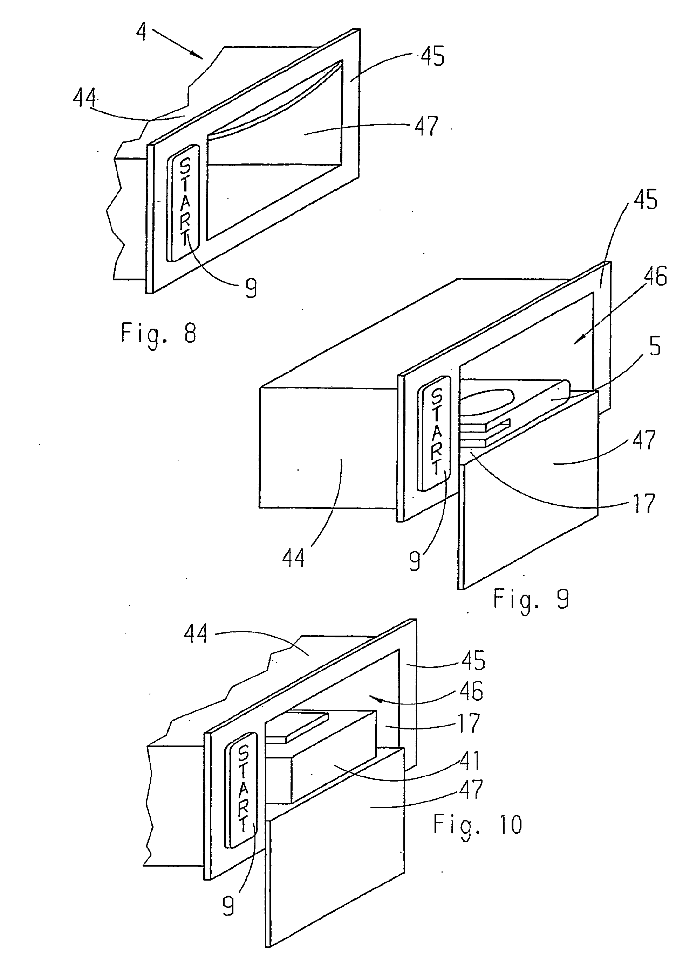

An dem die Steuerfunktion für die Wegfahrsperre und Zugangsberechtigung umfassenden Modul 19 ist wenigstens eine Empfangs- und eine Sendeantenne 27, 28 angeordnet. Es handelt sich dabei zum einen um eine HF-Funkantenne 27 für die Fernbedienung, die mittels des ID-Gebers 5 durch den Benutzer 2 entsprechend der obigen Beschreibung bedient wird. Zum anderen handelt es sich um eine induktive Antenne 28 für die "Keyless"-Funktionalität, und zwar um eine induktive Antenne 28 für die Überwachung des Innenraums 51 (siehe Fig. 2) auf das Vorhandensein des ID-Gebers 5 bei der Ausführung der KeylessGo-Funktion. Schließlich befindet sich im Ablagefach 17 eine mit dem Modul 19 verbundene Spule 29 für die induktive Energieübertragung zum ID-Geber 5, so daß insbesondere auch bei leerer Batterie des ID-Gebers 5 dessen Betrieb gewährleistet ist. Die Spule 29 kann auch Bestandteil einer Ladestation sein, wo ein Akku im ID-Geber 5 nachgeladen werden kann. Ebensogut kann ein Mobiltelefon 41 (siehe Fig. 10) zu diesem Zweck in der Ladestation 29 aufgenommen sein.

Ein Busanschluß 25, nämlich derjenige für den CAN B-Bus, ist mit einer separaten Schnittstelle 31 zur Kommunikation mit den weiteren Fahrzeug-Funktionen verbunden. Bei der Schnittstelle 31 handelt es sich um ein Gateway 32 in der Radio-Telematik-Plattform 30. In der Radio-Telematik-Plattform 30 befindet sich der weitere Anschluß 33, und zwar im Gateway 32, an einen Lichtleiter-Bus. Somit kann der CAN B-Bus über das Gateway 32 in der Radio-Telematik-Plattform 30 mit dem Lichtleiter-Bus kommunizieren, was eine besonders kostengünstige Lösung darstellt. In der Radio-Telematik-Plattform 30 sind das Radio und das Telefon, wobei sich das Handy in einem separaten Halter befinden kann, mit entsprechender Verkabelung untereinander verbunden. An den Lichtleiter-Bus können beispielsweise Sound, CD-Wechsler, Notruf und gegebenenfalls ein fest installiertes Telefon angeschlossen sein.

Das Modul 20 für die Realisierung der Steuerfunktion der Diagnose ist mit einer Diagnoseleitung 34 über eine Steckaufnahme 35 für die Prüfung in der Produktion des Kraftfahrzeugs 1 und in der Werkstatt verbindbar.

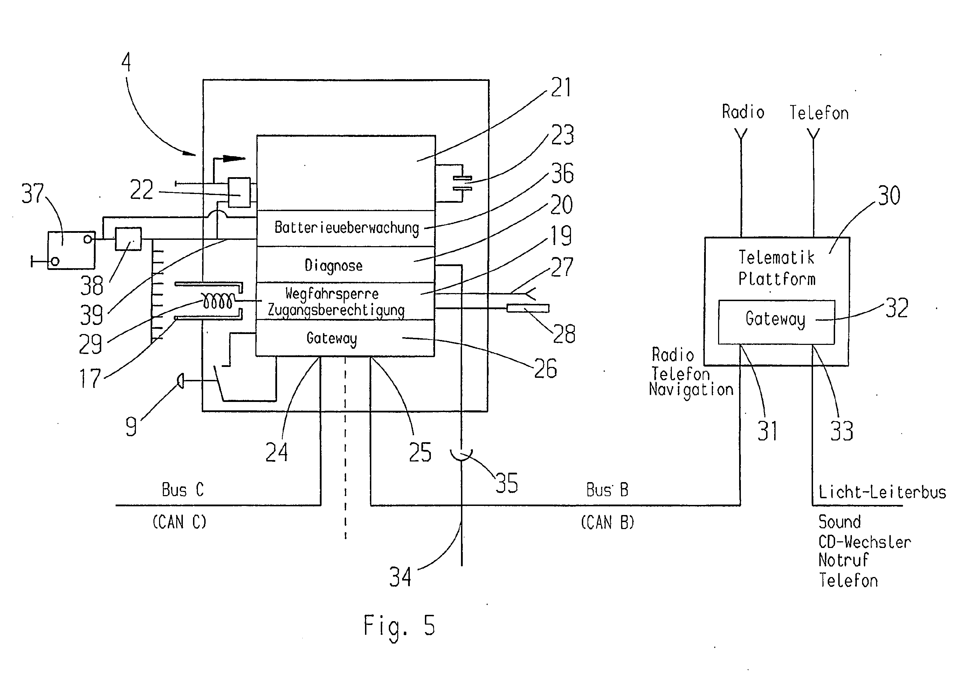

In einer weiteren Ausführung nach Fig. 5, besitzt das zentrale Bordnetz-Steuergerät 4 ein weiteres Modul 36, das die Steuerfunktion der Batterieüberwachung enthält. Das Modul 36 besitzt eine Verbindung zur Batterie 37 sowie zu einem Strommeßelement 38. Zusätzlich wird über eine Leitung 39 die Spannung zugeführt und gemessen. Flankierend zu diesen Meßeingängen wird dem Modul 36 über die Netzwerke das Einschalten der Verbraucher mit deren aufgenommenen Lasten gemeldet. Dadurch kann das Modul 36 mittels einer entsprechenden Berechnung den Ladezustand der Batterie 37 erfassen. Das Modul 36 kann mittels dieser Vernetzung zusätzlich das Ruhestrommanagement übernehmen. Anhand der direkten Verbindung zum Modul 19 für die Wegfahrsperre kann ermittelt werden, ob das Kraftfahrzeug 1 still steht oder fährt, was ergänzend für das Ruhestrommanagement durch das Modul 36 herangezogen werden kann. Das Signal des Start-Schalters 9 wird über das Modul 26 in die Vernetzung übertragen und aktiviert dann das Startrelais oder bei einem integrierten Starter-Generator den Pulswechselrichter.

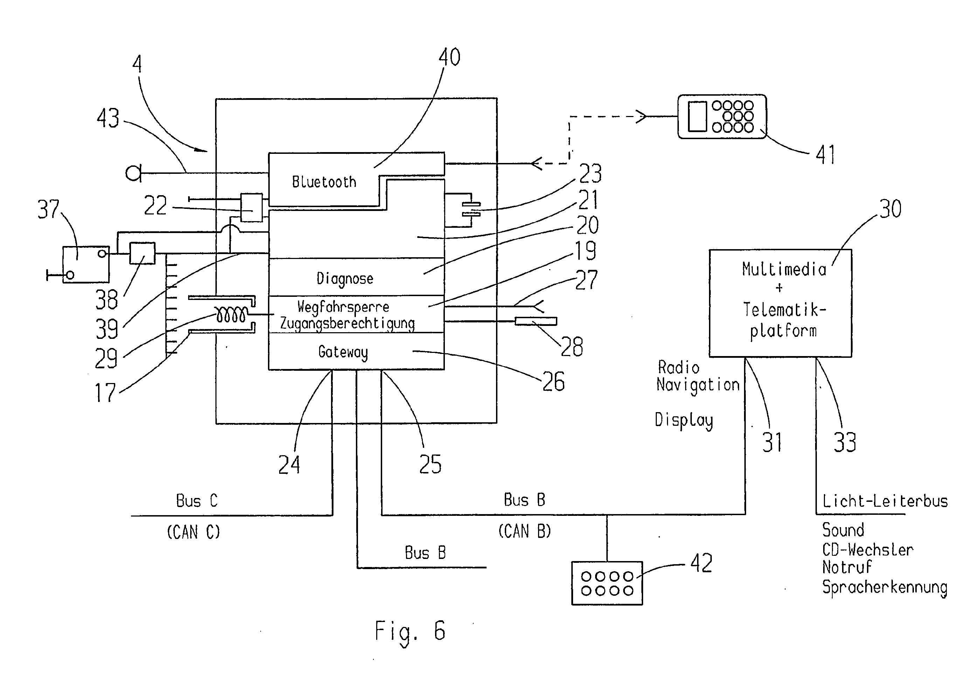

In nochmals einer weiteren Ausführung nach Fig. 6, ist ein zusätzliches Modul 40 vorgesehen, das die Steuerfunktion für eine drahtlose Signalübertragung enthält. Bevorzugterweise handelt es sich dabei um die standardisierte "wireless Bluetooth"-Übertragung. Mit Hilfe des Moduls 40 kann beispielsweise ein Mobiltelefon 41 an einem geeigneten beliebigen Ort im Kraftfahrzeug 1 abgelegt sein. Zum Telefonieren wird ein Bedienfeld 42 genutzt, welches an den CAN B-Bus angeschlossen sein kann. Das zentrale Bordnetz-Steuergerät 4 besitzt weiterhin einen Anschluß für ein Mikrofon 43. Über das als Freisprecheinrichtung benutzte Mikrofon 43 und die Radio-Lautsprecher, die über die Telematik-Plattform 30 aktiviert werden, ist dann die gesamte Telefonverbindung hergestellt. Zur Übertragung der Telefonsignale sollte der Lichtleiter- oder Kommunikationsbus mit der Multimedia- und Telematik-Plattform 30 verbunden sein. Üblicherweise ist der Lichtleiter-Bus als Ringbus ausgebildet. Anstelle des Lichtleiter-Bus kann auch ein kupferbasierender Hochgeschwindigkeits-Bus, beispielsweise der standardisierte Firewire-Bus eingesetzt werden.

Die Multimedia-Telematik-Plattform 30 beinhaltet neben Radio, Navigation, TV noch große Displays und mehrere Bedienfelder. In dieser komplexen Ausbaustufe kann es zweckmäßig sein, zusätzlich zum zentralen Mikrocontroller 21 einen nicht weiter gezeigten, zweiten Mikrocontroller vorzusehen. Damit können wichtige Steuerfunktionen, beispielsweise solche die für das Liegenbleiben des Kraftfahrzeugs 1 relevant sind, wie die Wegfahrsperre und/oder die Batterieüberwachung, redundant ausgebildet werden.

Mittels Bluetooth können über das Modul 40 auch andere Signale übertragen werden, beispielsweise solche für die Diagnose. Bei der Bandendeprüfung in der Produktion des Kraftfahrzeugs 1 oder auch in der Werkstatt muß dann nicht mehr das Prüfgerät mittels der Diagnoseleitung 34 angeschlossen und somit an das Kraftfahrzeug 1 gebracht werden, womit lediglich ein Kraftfahrzeug 1 getestet werden kann. Vielmehr können dann mittels Bluetooth mehrere Kraftfahrzeuge 1 parallel geprüft werden, wobei insbesondere keine Diagnoseleitung 34 notwendig ist. Im übrigen ist es vorteilhaft, wenn die Diagnose-Funktionen in einem Rechner bearbeitet werden.

Der Bluetooth-Chipsatz im Modul 40 kann zumindest teilweise vom zentralen Mikrocontroller 21 unterstützt werden, indem dieser Chipsatz mit dem zentralen Mikrocontroller 21 kommuniziert. Der Chipsatz kann eine gemeinsame Spannungsversorgung mit dem zentralen Mikrocontroller 21, jedoch gegebenenfalls einen getrennten, nicht weiter gezeigten Oszillator besitzen.

Desweiteren besteht die Möglichkeit, das Mikrofon 43 zur Sprachbedienung im Kraftfahrzeug 1 zu nutzen. Hierfür kann die Sprachbedienung im zentralen Bordnetz-Steuergerät 4, beispielsweise im Modul 40, integriert sein. Gegebenenfalls hat dies eine entsprechende hohe Integrationsdichte der dort verwendeten Bauelemente, beispielsweise "chip on silicon", zur Folge.

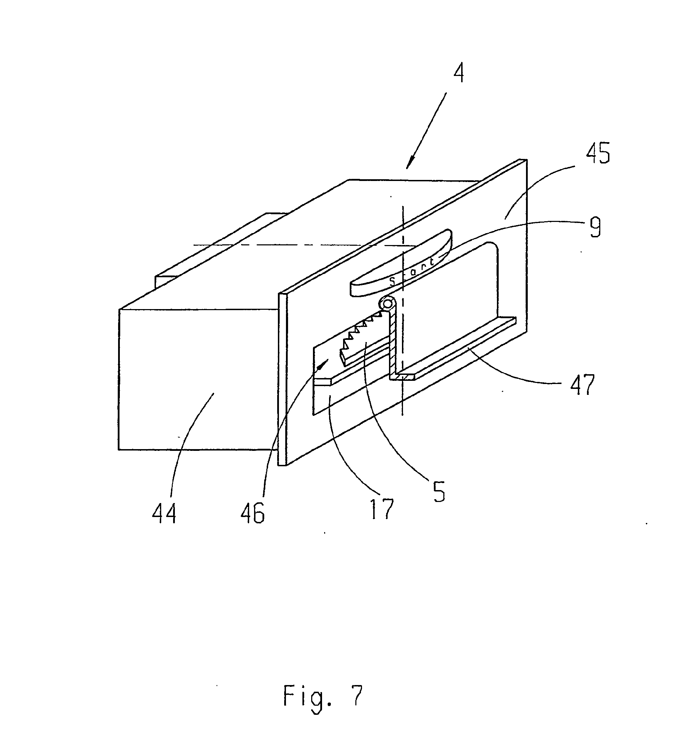

Eine Ausgestaltung des Steuergerätes 4 zur Realisierung wenigstens einer Steuerfunktion für das Bordnetz des Kraftfahrzeugs 1 ist in perspektivischer Ansicht näher in Fig. 7 zu sehen. Das Steuergerät 4 besitzt ein Gehäuse 44 mit einer Blende 45 und ein im Gehäuse 44 befindliches Ablagefach 17, das über eine Öffnung 46 in der Blende 45 für den Benutzer 2 zugänglich ist. Die Öffnung 46 ist mit einer Abdeckung 47 versehen, die beispielsweise als Klappe gemäß Fig. 7, Schieber gemäß Fig. 8 o. dgl. ausgestaltet ist. Das Ablagefach 17 dient der Aufnahme für ein der Steuerfunktion zugeordnetes, mobiles Steuerteil, wie für den ID-Geber 5, für ein Mobiltelefon 41 o. dgl., wobei in Fig. 9 der ID-Geber 5 und in Fig. 10 das Mobiltelefon 41 in das Ablagefach 17 eingelegt ist. Obwohl es sich bei dem Steuergerät 4 um ein beliebiges Steuergerät im Kraftfahrzeug 1 handeln kann, ist in dieser Art, wie bereits weiter oben erwähnt, bevorzugterweise das modular aufgebaute zentrale Bordnetz-Steuergerät 4 ausgestaltet, das mit wenigstens zwei Moduln 19, 20 für jeweils eine Grund-Steuerfunktion für das Bordnetz und mit wenigsten einem den Steuerfunktionen zugeordneten Busanschluß 24, 25 ausgestattet ist.

Ist das Kraftfahrzeug 1 mit einer KeylessGo-Funktionalität ausgestattet, so bietet es sich an, den Start/Stop-Schalter 9 für deren Bedienung am Steuergerät 4 anzuordnen. Hierfür ist in der Blende 45 eine haptisch optimierte Taste des Start/Stop-Schalters 9 integriert.

In Fig. 10 ist das Mobiltelefon 41 im Ablagefach 17 zu sehen. Hier kann aus Gründen des Diebstahlschutzes die Abdeckung 47 elektrisch bzw. elektromagnetisch verriegelbar und/oder elektromotorisch bewegbar ausgebildet sein. Diese Ent- und Verriegelung bzw. Bewegung erfolgt über einen Code und kann parallel zur Öffnung und/oder Schließung der Autotüren 6 bei der Zugangsberechtigung betätigt werden. Gegebenenfalls kann die Abdeckung 47 auch ein Schloß zur mechanischen Ent- und Verriegelung aufweisen.

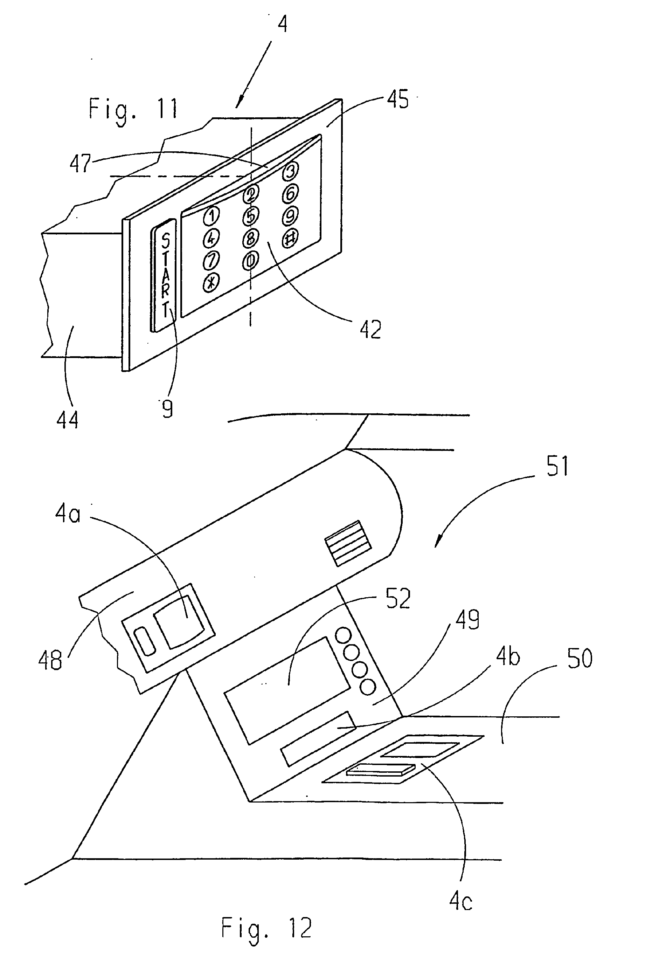

Am Steuergerät 4 kann ein Bedienblock 42 für das Telefon angeordnet sein. Zweckmäßigerweise kann der Bedienblock 42 in die Abdeckung 47 integriert sein, wie in Fig. 11 zu sehen ist. Eine derartige Ausgestaltung eignet sich besonders gut für die Bluetooth-Ausführung des Mobiltelefons 41, womit dann zur Kosteneinsparung auf dessen Aktivierung und Bedienung über eine Spracheingabe verzichtet werden kann.

Bevorzugterweise weist das Ablagefach 17 eine in Fig. 4 gezeigte elektrische Ladestation 29 für das mobile Steuerteil auf. Ergänzend kann der Ladezustand und/oder die Ladenotwendigkeit des mobilen Steuerteils ermittelt und dieser über Funk vom mobilen Steuerteil zu einer zentralen Empfangsstation im Steuergerät 4 übermittelt werden. Anschließend wird der Ladezustand vom Steuergerät 4 über die Busvernetzung zur Anzeige im Kombiinstrument in der Instrumententafel 48, in einem zentralen Display 52 in der Mittelkonsole 49 o. dgl. im Kraftfahrzeug 1 übermittelt (siehe Fig. 12). So kann der Benutzer 2 darauf hingewiesen werden, bei nicht ausreichendem Ladezustand das mobile Steuerteil in das Ablagefach 17 einzulegen, um damit dessen rechtzeitiges Nachladen an der Ladestation 29 zu gewährleisten. Der kontaktlos arbeitenden Energieübertragung in der elektrischen Ladestation 29 kann zusätzlich eine Signalübertragung zwischen dem mobilen Steuerteil und dem Steuergerät 4 überlagert sein. Beispielsweise kann diese Signalübertragung dann für den Austausch des Betriebssignals 7 dienen, falls es sich bei dem mobilen Steuerteil um den in das Ablagefach 17 eingelegten ID-Geber 5 handelt.

Das Steuergerät 4 bzw. das modular aufgebaute zentrale Bordnetz-Steuergerät 4 befindet sich im Innenraum 51 des Kraftfahrzeugs 1, derart daß das Ablagefach 17 für den Benutzer 2 gut zugänglich ist. Bevorzugt ist daher dessen Anordnung im Cockpit des Kraftfahrzeugs 1, insbesondere in der dort befindlichen Instrumentafel 48, was mit dem Steuergerät 4a in Fig. 12 dargestellt ist. Gleichermaßen geeignet ist die Anordnung in der oberen Mittelkonsole 49 entsprechend dem Steuergerät 4b, in der unteren Mittelkonsole 50 gemäß dem Steuergerät 4c o. dgl., was ebenfalls in Fig. 12 zu sehen ist. Ebenso ist auch eine Anordnung des Steuergerätes 4 in der Autotüre 6, beispielsweise in der Türverkleidung, der Armlehne o. dgl. möglich, was jedoch nicht weiter gezeigt ist.

Die Erfindung ist nicht auf die beschriebenen und dargestellten Ausführungsbeispiele beschränkt. Sie umfaßt vielmehr auch alle fachmännischen Weiterbildungen im Rahmen der Schutzrechtsansprüche. So kann ein derartiges Steuergerät nicht nur im Kraftfahrzeug eingesetzt werden. Es ist auch eine Verwendung bei vernetzten Maschinen, Anlagen o. dgl., beispielsweise an einer Werkzeugmaschine, möglich.

Bezugszeichen-Liste:
- 1:: Kraftfahrzeug
- 2:: Benutzer
- 3:: Schließsystem
- 4:: (erste) Einrichtung / Steuergerät / zentrales Bordnetz-Steuergerät
- 4a,b,c:: Steuergerät
- 5:: (zweite) Einrichtung / ID-Geber
- 6:: Autotüre
- 7:: Signal / Betriebssignal
- 8:: Wirkbereich
- 9:: Start/Stop-Schalter
- 10:: Türgriff
- 11,11':: Sender / Empfänger
- 12:: Fernbedienungssignal
- 13:: Innenspiegel
- 14:: Taste (an zweiter Einrichtung)
- 15:: Bussystem
- 16:: Steuergerät (in der Autotüre)
- 17:: Ablagefach (in erster Einrichtung)
- 18:: Ladestation
- 19:: Modul (für Wegfahrsperre, Zugangsberechtigung)
- 20:: Modul (für Diagnose)
- 21:: Mikrocontroller
- 22:: Spannungsversorgung
- 23:: Quarz
- 24:: Busanschluß (CAN C)
- 25:: Busanschluß (CAN B)
- 26:: Modul (für Busanschluß)
- 27:: HF-Antenne
- 28:: induktive Antenne
- 29:: Spule / Ladestation
- 30:: Telematik-Plattfom
- 31:: Schnittstelle (an Telematik-Plattform)
- 32:: Gateway (in Telematik-Plattform)
- 33:: Anschluß (zu Lichtleiter-Bus)
- 34:: Diagnoseleitung
- 35:: Steckaufnahme
- 36:: Modul (für Batterieüberwachung)
- 37:: Batterie
- 38:: Strommeßelement
- 39:: Leitung
- 40:: Modul (für drahtlose Signalübertragung)
- 41:: Mobiltelefon
- 42:: Bedienfeld / Bedienblock
- 43:: Mikrofon
- 44:: Gehäuse (von Bordnetz-Steuergerät)
- 45:: Blende
- 46:: Öffnung
- 47:: Abdeckung
- 48:: Instrumententafel
- 49:: obere Mittelkonsole
- 50:: untere Mittelkonsole
- 51:: Innenraum (von Kraftfahrzeug)
- 52:: Display

## Patentansprüche

1. Steuergerät für wenigstens eine Steuerfunktion für das Bordnetz eines Kraftfahrzeugs (1) mit einem Ablagefach (17), das der Aufnahme für ein der Steuerfunktion zugeordnetes, mobiles Steuerteil, nämlich einen Identifikations(ID)-Geber (5), dient, **dadurch gekennzeichnet, dass** das Ablagefach (17) zusätzlich zur Aufnahme eines Mobiltelefons (41) dient, wobei das Ablagefach (17) eine elektrische Ladestation (29) für das mobile Steuerteil und das Mobiltelefon aufweist.

2. Steuergerät nach Anspruch 1, **dadurch gekennzeichnet, daß** das Steuergerät (4) als modular aufgebautes, zentrales Bordnetz-Steuergerät mit wenigstens zwei Moduln (19,20) für jeweils eine Steuerfunktion für das Bordnetz und insbesondere mit wenigstens einem den Steuerfunktionen zugeordneten Busanschluß (24, 25) ausgestaltet ist.

3. Steuergerät nach Anspruch 1 oder 2, **dadurch gekennzeichnet, daß** das Kraftfahrzeug (1) mit einer KeylessGo-Funktionalität ausgestattet ist, und daß vorzugsweise am Steuergerät (4) ein Start/Stop-Schalter (9) für die Bedienung der KeylessGo-Funktionalität des Kraftfahrzeugs (1) angeordnet ist.

4. Steuergerät nach Anspruch 1, 2 oder 3, **dadurch gekennzeichnet, daß** am Steuergerät (4) ein Bedienblock (42) für das Telefon angeordnet ist.

5. Steuergerät nach einem der Ansprüche 1 bis 4, **dadurch gekennzeichnet, daß** der Ladezustand und/oder die Ladenotwendigkeit des mobilen Steuerteils ermittelbar ist, daß vorzugsweise der Ladezustand und/oder die Ladenotwendigkeit über Funk vom mobilen Steuerteil zu einer zentralen Empfangsstation im Steuergerät (4) übermittelbar ist, und daß weiter vorzugsweise der Ladezustand und/oder die Ladenotwendigkeit vom Steuergerät (4) über eine Busvernetzung zur Anzeige im Kombiinstrument in der Instrumententafel (48), in einem zentralen Display (52) in der Mittelkonsole (49) o. dgl. übermittelbar ist.

6. Steuergerät nach einem der Ansprüche 1 bis 5, **dadurch gekennzeichnet, daß** die elektrische Ladestation (29) mit einer kontaktlosen Energieübertragung arbeitet, und daß vorzugsweise der kontaktlosen Energieübertragung zusätzlich eine Signalübertragung überlagert ist.

7. Steuergerät nach einem der Ansprüche 1 bis 6, **dadurch gekennzeichnet, daß** das Ablagefach (17) eine mittels einer Abdeckung (47) versehene Öffnung (46) als Zugang aufweist, daß vorzugsweise die Abdeckung (47) als Klappe, Schieber o. dgl. ausgestaltet ist, und daß weiter vorzugsweise die Abdeckung (47) elektromotorisch bewegbar ist.

8. Steuergerät nach einem der Ansprüche 1 bis 7, **dadurch gekennzeichnet, daß** die Abdeckung (47) mechanisch mittels eines Schlosses, elektrisch mittels eines Elektromotors, elektromagnetisch mittels eines Elektromagneten o. dgl. ent- und/oder verriegelbar ist, wobei vorzugsweise die elektrische bzw. elektromagnetische Entriegelung über einen Code erfolgt.

9. Kraftfahrzeug mit einem modular aufgebauten Steuergerät (4) nach einem der vorangehenden Ansprüche, **dadurch gekennzeichnet, daß** das Steuergerät (4a, b, c) im Cockpit, insbesondere in der dort befindlichen Instrumentafel (48), in der oberen Mittelkonsole (49), in der unteren Mittelkonsole (50), in der Autotüre (6) o. dgl. angeordnet ist.

## Claims

1. Controller for at least one control function of the on-board network of a motor vehicle (1) comprising a storage compartment (17) which is designed for holding a mobile control element provided for the control function, such as an ID (identification) transmitter (5), **characterised in that** the storage compartment (17) is also used for holding a mobile phone (41), wherein the storage compartment (17) comprises an electric charging station (29) for the mobile control element and the mobile phone.

2. Controller according to claim 1, **characterised in that** the control device (4) is designed as a modular, central on-board network controller with at least two modules (19, 20) for a control function of the on-board network and is designed In particular to have at least one bus connection (24, 25) assigned to the control functions.

3. Controller according to claim 1 or 2, **characterised in that** the motor vehicle (1) Is equipped with a keyless-go function, and **in that** preferably on the controller (4) there is a start/stop switch (9) for operating the keyless-go function of the motor vehicle (1).

4. Controller according to claim 1, 2, or 3, **characterised in that** on the controller (4) an operating block (42) is arranged for the phone.

5. Controller according to any one of claims 1 to 4, **characterised in that** the loading status and/or the loading requirement of the mobile control element can be determined, **in that** preferably the loading status and/or the loading requirement can be transmitted by radio from the mobile control element to a central receiver in the controller (4), and **in that** also preferably the loading status and/or the loading requirement can be transmitted by the controller (4) via a bus network for display in the combined Instrument in the instrument panel (48), in a central display (52) in the central console (49) or the like.

6. Controller according to any one of claims 1 to 5, **characterised in that** the electrical loading station (29) operates with a contact-free power transmission and **in that** preferably a signal transmission overlayers the contact-free energy transmission.

7. Controller according to any one of claims 1 to 6, **characterised in that** the storage compartment (17) comprises an opening (46) provided with a lid (47) as access, **in that** preferably the lid (47) is designed as a flap, slide or the like and **in that** also preferably the lid (47) can be moved by electric motor.

8. Controller according to any one of claims 1 to 7, **characterised in that** the lid (47) can be unlocked and/or locked electrically by means of an electric motor or electromagnetically by means of an electromagnet or the like, whereby preferably the electrical or electromagnetic unlocking Is performed via a code.

9. Motor vehicle with a modular controller (4) according to any one of the preceding claims, **characterised in that** the controller (4a, b, c) is arranged in the cockpit, in particular in the instrument panel (48) located there, In the upper middle console (49), in the lower middle console (50), in the vehicle doors (6) or the like.

## Revendications

1. Appareil de commande pour au moins une fonction de commande du réseau embarqué d'un véhicule automobile (1) comportant un compartiment de rangement (17) servant à recevoir une pièce de commande mobile à savoir, un générateur d'identification (ID) (5) associé à la fonction de commande,
appareil de commande **caractérisé en ce que** le compartiment de rangement (17) sert en outre à recevoir un téléphone portable (41), le compartiment de rangement (17) comporte un chargeur électrique (29) pour la pièce de commande mobile et pour le téléphone portable.

2. Appareil de commande selon la revendication 1,
**caractérisé en ce que**
l'appareil de commande (4) est réalisé comme appareil de commande central du réseau embarqué, à structure modulaire, ayant au moins deux modules (19, 20) respectifs pour une fonction de commande du réseau embarqué et notamment avec au moins un branchement de bus (24, 25) associé aux fonctions de commande.

3. Appareil de commande selon la revendication 1 ou 2,
**caractérisé en ce que**
le véhicule (1) est équipé d'une fonction d'accès sans clef, et
de préférence l'appareil de commande (4) comporte un commutateur marche/arrêt (9) pour utiliser la fonction d'accès sans clef du véhicule (1).

4. Appareil de commande selon l'une des revendications 1, 2 ou 3,
**caractérisé en ce que**
l'appareil de commande (4) comporte un bloc d'utilisation (42) du téléphone.

5. Appareil de commande selon l'une des revendications 1 à 4,
**caractérisé en ce que**
l'état de charge et/ou le besoin de charge de la pièce de commande mobile, se détermine **en ce que** de préférence, l'état de charge et/ou la nécessité de charge sont transmis par radio de la pièce de commande mobile à un poste de réception central dans l'appareil de commande (4), et
en outre, de préférence, l'état de charge et/ou la nécessité de charge de l'appareil de commande (4) sont transmis par la liaison par bus à l'affichage des instruments combinés du tableau de bord (48) à un afficheur central (52) dans la console centrale (49) ou moyen analogue.

6. Appareil de commande selon l'une des revendications 1 à 5,
**caractérisé en ce que**
le chargeur électrique (29) fonctionne par transmission d'énergie sans contact, et
la transmission d'énergie sans contact se fait de préférence en combinaison avec une transmission de signal.

7. Appareil de commande selon l'une des revendications 1 à 6,
**caractérisé en ce que**
le compartiment de rangement (17) comporte une ouverture d'accès (46) munie d'un couvercle (47),
le couvercle (47) est réalisé de préférence comme volet ou comme élément coulissant ou analogue, et
en outre, de manière préférentielle, le couvercle (47) est actionné par un moteur électrique.

8. Appareil de commande selon l'une des revendications 1 à 7,
**caractérisé en ce que**
le couvercle (47) se verrouille mécaniquement à l'aide d'une serrure, électriquement à l'aide d'un moteur électrique, de manière électromagnétique à l'aide d'un électro-aimant ou analogue, assurant le verrouillage et/ou le déverrouillage,
le déverrouillage électrique ou électromagnétique se faisant de préférence par l'intermédiaire d'un code.

9. Véhicule automobile équipé d'un appareil de commande (4) à structure modulaire selon l'une des revendications précédentes,
**caractérisé en ce que**
l'appareil de commande (4a, b, c) est installé dans l'habitacle, notamment dans le tableau de bord (48), dans la console centrale supérieure (49), dans la console centrale inférieure (50), dans la portière (6) du véhicule ou dans un moyen analogue.
